# EUROPÄISCHE PATENTSCHRIFT

(11) **EP 2 928 703 B1**
(45) Veröffentlichungstag und Bekanntmachung des Hinweises auf die Patenterteilung: **22.02.2017**
(21) Anmeldenummer: 13799304.4
(22) Anmeldetag: 04.12.2013
(51) Int. Cl.: C08L 9/06, B60C 1/00, C08K 5/10, C08L 9/00, C08L 21/00, C08L 7/00, C08K 3/04

(54) **KAUTSCHUKMISCHUNGEN ENTHALTEND KURZKETTIGE ALKYLESTER DES GLYZERINS**
RUBBER MIXTURES CONTAINING SHORT-CHAIN ALKYL ESTERS OF GLYCERINE
MÉLANGES DE CAOUTCHOUC COMPRENANT UN ALKYL-ESTER À CHAÎNE COURTE DE GLYCÉRINE

(30) Priorität: 04.12.2012 EP 12195403; 10.04.2013 EP 13163140
(43) Veröffentlichungstag der Anmeldung: 14.10.2015
(73) Patentinhaber: LANXESS Deutschland GmbH, 50569 Köln (DE)
(72) Erfinder: FELDHUES, Ulrich, 51465 Bergisch Gladbach (DE); UNTERBERG, Heinz, 41540 Dormagen (DE); WEIDENHAUPT, Hermann-Josef, 50259 Pulheim (DE); WIEDEMEIER-JARAD, Melanie, 41540 Dormagen (DE); HAGEMANN, Jörg, 51061 Köln (DE)
(86) Internationale Anmeldenummer: PCT/EP2013/075449
(87) Internationale Veröffentlichungsnummer: WO 2014/086810

(56) Entgegenhaltungen:
- EP-A2- 2 145 914
- WO-A1-2008/019461
- DE-A1-102010 005 558
- GB-A- 369 576
- GB-A- 637 574
- US-A- 4 452 820
- US-A1- 2011 196 071

## Beschreibung

Die vorliegende Erfindung betrifft neue Kautschukmischungen enthaltend kurzkettige Ester des Glyzerins, Verfahren zur Herstellung und Vulkanisation der Kautschukmischungen, die Verwendung der Kautschukmischungen zur Herstellung von Vulkanisaten, unter Verwendung der Kautschukmischungen erhaltene Vulkanisate, Kautschukprodukte enthaltend diese Vulkanisate und diese Kautschukprodukte enthaltende Fahrzeuge.

Die Ansprüche an die physikalischen Eigenschaften von Kautschukmischungen nehmen stetig zu. So sind beispielsweise die Hersteller von Reifen aufgrund gesetzlicher Vorgaben und wirtschaftlicher Anreize dazu angehalten, den Rollwiderstand zu senken, was natürlich nicht zu Lasten der sicherheitsrelevanten Nasshaftung erfolgen darf und zudem nicht mit einem höheren Abrollgeräusch einhergehen soll. Es ist bekannt, zur Verringerung der Verformungsarbeit beim Abrollen bzw. zur Verbesserung der fahrdynamischen Eigenschaften sowie des Abriebs verstärkende Füllstoffe wie beispielsweise Ruß, Kieselsäure, Cellulose oder Schichtsilikate zuzusetzen.

Die verstärkenden Füllstoffe erhöhen jedoch häufig die Mooney Viskosität der Kautschukmischung und erschweren daher deren Verarbeitbarkeit. Zur Abhilfe werden der Kautschukmischung deshalb neben den verstärkenden Füllstoffen meist auch Hilfsmittel zugesetzt, welche die Verarbeitbarkeit der Kautschukmischung verbessern sollen. Hierfür werden z. B. Fettsäureester, Fettsäuresalze oder Weichmacheröle verwendet, wobei diese aber neben der Verbesserung der Fließfähigkeit die Härte der Vulkanisate erheblich vermindern, wodurch die verstärkende Wirkung des Füllstoffes eingeschränkt wird, was zu einem unbefriedigenden Fahrverhalten eines daraus hergestellten Autoreifens, besonders in Kurven führt. Eine weitere Erhöhung des Anteils an verstärkendem Füllstoff führt dann zwar wieder zu einer erhöhten Härte des Vulkanisates, gleichzeitig aber wieder zu einer höheren Mischungsviskosität was sich wiederum nachteilig für die Verarbeitbarkeit des Vulkanisates erweist. Gleiches gilt für eine Reduktion des Weichmacheröles.

Im Sinne einer guten Verarbeitbarkeit sollte eine Kautschukmischung neben einer niedrigen Fließviskosität (Mooney Viskosität ML 1+4/100°C) eine zu Beginn langsam ablaufende Vulkanisation aufweisen (lange Anvulkanisationszeit), die darauffolgende Ausvulkanisation unter Wärmeeinfluss aber möglichst schnell ablaufen, um kurze Produktionszyklen und einen geringen Energieaufwand zu ermöglichen. Als Hilfsmittel werden hierfür im Stand der Technik beispielsweise Vulkanisationsbeschleuniger wie Sulfenamide, z.B. CBS (n-Cyclohexylbenzothiazole-2-sulphenamide), eingesetzt. Es ist nicht bekannt, dass Weichmacher bzw. Verarbeitungsadditive die Anvulkanisationszeit verlängern und die Ausvulkanisation beschleunigen können. Zudem erwartet der Fachmann von Weichmachern, dass diese einen negativen Einfluss auf die Härte ausüben.

Triacetin (Glycerintriacetat, CAS-Nr. 102-76-1) ist beispielsweise als Weichmacher für Stärke (WO 9005161 A1), Polylactid (US 6,117,928) und Radiergummi (JP2002254894) beschrieben. Eine Verwendung als Weichmacher in Acrylnitril-Butadien-Kautschuk (NBR) ist in Plasticization of butadiene acrylonitrile rubber, Senichev, V. Yu, ISSN: 0022-9466 erwähnt. Allerdings wird nur auf das Quellverhalten im weichgemachten Acrylnitril-Butadien-Kautschuk eingegangen. Je besser die Wechselwirkung zwischen der Kautschukmatrix und dem so genannten Lösungsmittel (in diesem Fall Triacetin), desto höher ist der Quellungsgrad bzw. die Quellung bei konstanter Vernetzungsdichte. Die Untersuchungsergebnisse des Quellverhaltens zeigen deutlich, dass die Acrylnitril-Butadien-Kautschukmatrix hinsichtlich Triacetin einen sehr niedrigen Quellungsindex aufweist. Hieraus schließt der Fachmann, dass Triacetin kein gutes Lösungsmittel für Acrylnitril-Butadien-Kautschuk ist, keine gute Verträglichkeit zu dieser Kautschukmatrix zeigt und somit die Fließfähigkeit des Kautschuks nicht wesentlich verändert.

In DE102010005558A ist eine Weichmacherzubereitung beschrieben, enthaltend einen oder mehrere Ether-Thioether und/oder Ester-Thioether als Komponente A und einen oder mehrere Ester des Glycerins mit Carbonsäuren als Komponente B wie z.B. Triacetin. Als Anwendungsbereich dieser Mischung sind ebenfalls nur polare Kautschuke, insbesondere NBR erwähnt. Die Mooney-Viskosität (ML 1 + 4) einer solchen Triacetinhaltigen Kautschukmischung ist nahezu identisch zu einer Triacetin nicht enthaltenden Referenzmischung. Für viele Anwendungen, insbesondere für Reifen, werden aber weniger polare sondern hauptsächlich unpolare Kautschuke verwendet.

Die Verwendung von Triacetin als Weichmacher und/oder Verarbeitungsadditiv in unpolaren Kautschuk-Typen ist nicht beschrieben. Der Fachmann würde dies auch nicht als gangbar erachten, da es bei der Herstellung einer Kautschukmischung mit guten Eigenschaften darauf ankommt, dass die Komponenten verträglich sind. Laut Röthemeyer und Sommer (Kautschuktechnologie, Hanser Verlag München Wien, 2. Ausgabe, 2006, ISBN-13: 978-3-446-40480-9, Seite 331-333) lässt sich anhand des Löslichkeitsparameters von Kautschuk und Weichmachern die Verträglichkeit des Weichmachers im Kautschuk abschätzen. Hierbei sollte in erster Annäherung die Differenz der Löslichkeitsparameter innerhalb von ± 10% liegen. In dem genannten Werk sind folgende Löslichkeitsparameter für Kautschuke angegeben:

| **Kautschuk** | **Löslichkeitsparameter (MPa)1/2** |
|---|---|
| EPDM (Ethylen/Propylen/Dien/-Kautschuk) | 16,1 |
| NR (Naturkautschuk) | 16,5 |
| BR (Butadien-Kautschuk) | 17,1 |
| SBR (Styrol/Butadien-Kautschuk) | 17,6 |
| CR (Chloropren-Kautschuk) | 19,0 |
| NBR (Acrylnitril-butadien-Kautschuk) | 19,0 |
| Weichmacher | Löslichkeitsparameter (MPa)1/2 |
| Glycerintriacetat (Triacetin) | 22,0* |

| | |
|---|---|
| * Durch Umrechnung des Wertes für Triacetin von 10,77 cal/m3 gemäß EP 1813310 mit dem Faktor 1 cal/m3 = 2,0455 MPa. | |

Anhand der Lehre von Röthemeyer und Sommer erwartet der Fachmann, dass Triacetin generell in unpolaren Kautschuken, d.h. z.B. in Kautschuken mit einem Löslichkeitsprodukt von 17.6 nicht gut löslich sein sollte, da die Differenz der Löslichkeitsprodukte bereits 20% beträgt.

Aufgabe der vorliegenden Erfindung war es, Kautschukmischungen auf Basis unpolarer Kautschuke mit verbesserten Verarbeitungseigenschaften wie niedriger Mooney Viskosität, langer An- und kurzer Ausvulkanisationszeit bereit zu stellen, welche sich in Vulkanisate mit hoher Härte und Bruchdehnung überführen lassen.

Überraschend wurde nun gefunden, dass die Zugabe von kurzkettigen Alkylestern des Glyzerins zu Kautschukmischungen enthaltend unpolare Kautschuke und Füllstoffe die Mooney Viskosität erheblich erniedrigt, was zu einer wesentlich besseren Verarbeitbarkeit führt. Zusätzlich werden durch die Zugabe der Alkylester die Anvulkanisationszeiten verlängert, die Ausvulkanisationszeit verkürzt, sowie eine gute Härte des Vulkanisats erzielt, wobei die Nasshaftung nicht wesentlich beeinträchtigt wird.

Die vorliegende Erfindung betrifft Kautschukmischungen enthaltend mindestens je einen unpolaren Kautschuk, Füllstoff, und kurzkettigen Alkylester des Glyzerins gemäß Formel (I): 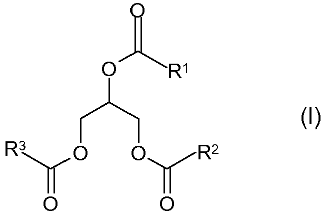 worin
R1, R2, R3 unabhängig voneinander Wasserstoff oder ein geradkettiger oder verzweigter C1 bis C4-Alkylrest, bevorzugt ein geradkettiger oder verzweigter C1 bis C4-Alkylrest, besonders bevorzugt ein geradkettiger oder verzweigter C1 bis C2-Alkylrest und ganz besonders bevorzugt Methyl bedeuten.

Die Verbindung der Formel (I), bei der R1, R2 und R3 für Methyl stehen wird Glycerintriacetat, 1,2,3-Propantrioltriacetat oder auch Triacetin genannt und ist kommerziell erhältlich. Alle Verbindungen der Formel (I), bieten zudem den Vorteil, dass sie aus pflanzlich gewonnenem Glycerin, d.h. zumindest teilweise aus nachwachsenden Rohstoffen gewonnen werden können.

Überraschenderweise wurde zudem gefunden, dass die Verbindungen der Formel (I), insbesondere Triacetin, in der Lage sind Cellulose und/oder Cellulosederivate, insbesondere Umsetzungsprodukte von Cellulose mit Phenyl -isocyanat, n-Buttersäureanhydride, Essigsäureanhydrid, Butylisocyanat, Stearylchlorid, Stearylisocyanat, Buttersäurechlorid an- oder aufzulösen und dadurch eine vorteilhafte Anwendung in den vorliegenden Kautschukmischungen zu ermöglichen. Bevorzugt sind Cellulosederivate, die durch Veresterung von Cellulose mit Carbonsäuren erhältlich sind, ganz besonders bevorzugt ist Celluloseacetat. Die Cellulose bzw. deren Derivate können dabei allein oder in beliebiger Mischung eingesetzt werden, wobei die alleinige Verwendung von Celluloseacetat meist bevorzugt ist. Der Gesamtanteil an Verbindungen der Formel (I) in erfindungsgemäßen Kautschukmischungen beträgt im Allgemeinen 1 - 40 phr, vorzugsweise 2 - 20 phr, besonders bevorzugt 4 - 15 phr und ganz besonders bevorzugt 6 - 10 phr, kann aber bei Verwendung von Verbindungen der Formel (I) zusammen mit Cellulose und/oder Cellulosederivaten der Gehalt an Triacetin in den erfindungsgemäßen Kautschukzubereitungen höher sein und im Bereich von 0,1 bis 80 phr, vorzugsweise 0,2 bis 60 phr und besonders bevorzugt 0,5 bis 45 phr, insbesondere 5-30 phr liegen, wobei der Gehalt an Cellulose und/oder Cellulosederivaten dann typischerweise 0,1 bis 100 phr, vorzugsweise 0,2 bis 50 phr, besonders bevorzugt 0,3 bis 30 phr und meist bevorzugt 0,3 bis 10 phr beträgt. Die Einheit phr steht für Gewichtsteile bezogen auf 100 Gewichtsteile an in der Kautschukmischung eingesetztem Kautschuk.

### Kautschuk

Die erfindungsgemäße Kautschukmischung enthält mindestens einen unpolaren Kautschuk. Im Sinne der vorliegenden Anmeldung werden darunter Kautschuke verstanden, welche ein Löslichkeitsprodukt gemäß der in obiger Literatur von Röthemeyer und Sommer beschriebenen Methode von nicht mehr als 18.0, bevorzugt im Bereich von 16 bis 18, besonders bevorzugt im Bereich von 16.5 bis 17.6 aufweisen. Bevorzugt sind Kautschuke auf Basis von Dienen, insbesondere doppelbindungshaltige Kautschuke, die praktisch keinen Gelanteil enthalten und die nach DIN/ISO 1629 als R-Kautschuke bezeichnet werden. Diese Kautschuke enthalten Doppelbindungen in der Hauptkette. Bevorzugt verwendete Kautschukkomponenten sind beispielsweise solche auf Basis von
NR: Naturkautschuk
oder auf Basis von Synthesekautschuken wie zum Beispiel:
SBR: Styrol/Butadienkautschuk
BR: Polybutadienkautschuk
IR: Polyisopren
SIBR: Styrol/Isopren-Kautschuk
IIR: Butylkautschuk (Isobuten/Isopren-Kautschuk)
bzw. Mischungen davon.

Doppelbindungshaltige Kautschuke schließen erfindungsgemäß auch solche ein, die nach DIN/ISO 1629 M-Kautschuke sind und neben der gesättigten Hauptkette Doppelbindungen in Seitenketten aufweisen. Hierzu gehört z. B. EPDM.

Erfindungsgemäß bevorzugt sind Kautschuke aus der Gruppe NR, BR, SBR, IIR und EPDM, besonders bevorzugt NR, BR und SBR, ganz besonders bevorzugt NR und BR, sowie Mischungen dieser Kautschuke.

Unter Styrol/Diolefin (insbesondere Butadien)-Kautschuken werden sowohl Lösungs-SBR-Kautschuke abgekürzt: L-SBR als auch Emulsion-SBR-Kautschuke, abgekürzt: E-SBR verstanden. Unter L-SBR versteht man kautschukartige Polymere, die in einem Lösungsprozess auf der Basis von Vinylaromaten und konjugierten Dienen hergestellt werden. Geeignete vinylaromatische Monomere sind Styrol, o-, m- und p-Methylstyrol, technische Methylstyrolgemische, p-tert.-Butylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat beträgt bevorzugt 5 bis 50 Gew.-%, besonders bevorzugt 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien, bevorzugt 1,3-Butadien und Isopren. Der Gehalt an einpolymerisierten Dienen beträgt im Allgemeinen 50 bis 95 Gew.-%, bevorzugt 60 bis 90 Gew.-%. Der Gehalt an Vinylgruppen im einpolymerisierten Dien beträgt im Allgemeinen 10 bis 90%, der Gehalt an 1,4-trans-ständigen Doppelbindungen beträgt 20 bis 80%. Der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 20%. Unter den SBR-Kautschuken sind L-SBR Kautschuke bevorzugt.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen. Unter L-SBR sind sowohl lineare als auch verzweigte oder endgruppenmodifizierte Kautschuke zu verstehen.

Die in Lösung polymerisierten Vinylaromat/Diolefin-Kautschuke besitzen vorteilhaft Mooneywerte zwischen 20 und 150 Mooneyeinheiten, vorzugsweise 30 bis 100 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20°C auf, bestimmt durch Differentialthermoanalyse (DSC).

Unter E-SBR versteht man kautschukartige Polymere, die in einem Emulsionsprozess auf der Basis von Vinylaromaten, konjugierten Dienen und gegebenenfalls weiteren Monomeren hergestellt werden. Vinylaromaten sind Styrol, p-Methylstyrol und alpha-Methylstyrol. Diene sind insbesondere Butadien und Isopren. Die Gehalte an Vinylaromaten liegen zwischen 10 und 60 Gew.-%. Die Glastemperatur liegt zwischen -50 und +20°C (bestimmt mittels DSC) und die Mooneywerte zwischen 20 und 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80°C bis +20°C auf, bestimmt durch Differentialthermoanalyse (DSC).

Polybutadien (BR) umfasst insbesondere zwei unterschiedliche Polybutadien-Typklassen. Die erste Klasse weist einen 1,4-cis-Gehalt von mindestens 90% auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Ndeingesetzt. Die Glastemperatur dieses Polybutadiens liegt bevorzugt bei ≤ -90°C (bestimmt mittels DSC).

Die zweite Polybutadientypklasse wird mit Li-Katalysatoren hergestellt und weist Vinylgehalte von 10% bis 80% auf. Die Glastemperaturen dieser Polybutadienkautschuke liegen im Bereich von -90 bis +20°C (bestimmt mittels DSC).

Die erfindungsgemäß verwendeten Kautschuke können auch mit Mineralölen verstreckt sein.

Besonders bevorzugte erfindungsgemäße Kautschukmischungen sind frei von Nitrilkautschuk NBR. Ganz besonders bevorzugte erfindungsgemäße Kautschukmischungen sind frei von Nitrilkautschuk NBR, von hydriertem Nitrilkautschuk HNBR, von Styrol/Butadien/ Acrylnitrilkautschuk SNBR und von carboxyliertem Butadienacrylnitrilkautschuk XNBR, auch in hydrierter Form HXNBR. Unter 'frei' versteht man im Rahmen dieser Erfindung einen Gehalt von kleiner 10 phr, bevorzugt kleiner 1 phr, besonders bevorzugt kleiner 0,1 phr und ganz besonders bevorzugt kleiner 0,01 phr an dem betreffenden Kautschuk.

In einer bevorzugten Ausführungsform ist die Summe der Produkte aus Anteil (in phr) und Löslichkeitsparameter der in der Kautschukmischung enthaltenen Kautschuke dividiert durch 100 nicht größer als 18, bevorzugt im Bereich von 16 bis 18 und besonders bevorzugt im Bereich von 17,6 bis 16,5.

### Füllstoffe

Die erfindungsgemäße Kautschukmischung enthält bevorzugt mindestens einen Füllstoff aus der Gruppe der hydroxylgruppenhaltigen oxidischen Füllstoffe, vorzugsweise mindestens einen siliziumhaltigen oxidischen hydroxylgruppen haltigen Füllstoff, besonders bevorzugt Kieselsäure, ganz besonders bevorzugt hydrophile Kieselsäure, welche an der Oberfläche Hydroxylgruppen trägt.

Kieselsäure oder "Silica" kann insbesondere als pyrogene Kieselsäure oder gefällte Kieselsäure eingesetzt werden, wobei erfindungsgemäß gefällte Kieselsäure bevorzugt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt werden Kieselsäuren mit spezifischen BET-Oberflächen von 5 bis 1000 m²/g, besonders bevorzugt von 20 bis 400 m²/g eingesetzt.

Erfindungsgemäße Kautschukmischungen enthalten vorzugsweise 5 bis 100 phr, besonders bevorzugt 30 bis 100 phr und ganz besonders bevorzugt 50 bis 90 phr an hydroxylgruppenhaltigen oxidischen Füllstoffen. Der Anteil hydroxylgruppenhaltiger oxidischer Füllstoffe bezogen auf die Gesamtmenge an eingesetzten Füllstoffen beträgt vorzugsweise mindestens 30%, besonders bevorzugt mindestens 50%.

Weitere für die erfindungsgemäßen Kautschukmischungen geeignete Füllstoffe sind Ruße, insbesondere nach dem Flammruß, Furnace- oder Gasruß-Verfahren hergestellte Ruße, welche BET-Oberflächen von 5 - 200 m²/g besitzen, wie SAF-, ISAF-, IISAF-, HAF-, FEF- oder GPF-Ruße. Ruße können in der erfindungsgemäßen Kautschukmischung in einer Gesamtmenge von 0 bis 160 phr, vorzugsweise 1 bis 100 phr, besonders bevorzugt 5 bis 80 phr enthalten sein.

Falls die erfindungsgemäße Kautschukmischung Ruß und hydroxylgruppenhaltige oxidische Füllstoffe enthält, so beträgt die Gesamtmenge dieser beiden Füllstoffarten vorzugsweise 20 bis 160 phr, besonders bevorzugt 25 bis 140 phr. Ganz besonders bevorzugt werden bei der vorliegenden Erfindung mindestens 5 phr Ruß zusammen mit mindestens 25 phr Silica eingesetzt.

Weitere Füllstoffe, die gegebenenfalls eingesetzt werden können, sind:
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm
- natürliche Silikate, wie Kaolin und andere natürlich vorkommende Kieselsäuren,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Matten, Stränge oder Mikroglaskugeln),

### Silane zur Oberflächenmodifizierung von Füllstoffen

Die Oberfläche von Kieselsäure und anderen Füllstoffen, die Silanolgruppen an der Oberfläche besitzen kann leicht mit mono- und polyfunktionellen organische Silanen modifiziert werden, und führt zur Bildung organischer Siloxane. Dies verbessert die Wechselwirkung mit unpolaren Kautschuken. Die erfindungsgemäße Kautschukmischung kann daher ein oder mehrere dieser organischen Silane, vorzugsweise schwefelhaltige organische Silane enthalten. Hierbei werden Verbindungen bevorzugt, die eine oder mehrere Alkoxysilyl-, insbesondere eine oder mehrere Trialkoxysilylgruppen enthalten.

Ganz besonders bevorzugte schwefelhaltige organische Silane sind Bis(tri-ethoxy-silyl-propylpolysulfane), wie Bis(triethoxysilylpropyl)disulfid und Bis(triethoxisilylpropyl)-tetrasulfid welche z.B. unter dem Handelsnamen Silan Si 75 und Silan Si 69 der Fa. Degussa erhältlich sind. Ebenfalls ganz besonders bevorzugt ist 3-Thiocyanatopropyltriethoxysilan wie Si 264 von Evonik, 3-(Triethoxysilyl)-1-propanthiol, polyetherfunktionalisierte Mercaptosilane wie Si 363 von Evonik.

Die schwefelhaltigen siliciumorganischen Verbindungen werden typischerweise in einer Menge von 0,1 phr bis 14 phr, vorzugsweise von 0,2 bis 12 phr, besonders bevorzugt 2 bis 10 phr zugesetzt.

In einer bevorzugten Ausführungsform enthalten die erfindungsgemäßen Kautschukmischungen schwefelhaltige Additive, wie sie in der EP 2517898 beschrieben wurden, vorzugsweise 0,1 - 15 phr dieser schwefelhaltigen Additive. Ganz besonders bevorzugt sind erfindungsgemäße Kautschukmischungen, die 2,2'-Tetrathiodibenzoesäure (CAS 80304-10-5) insbesondere in Mengen von 0,1 bis 15 phr enthalten.

### Vernetzer

In einer bevorzugten Ausführungsform enthalten die vorliegenden Kautschukmischungen einen oder mehrere Vernetzer. Hierfür sind peroxidische Vernetzer wie Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin oder Schwefel-basierende Vernetzer geeignet, wobei Schwefel-basierte Vernetzer besonders bevorzugt sind.

Als Schwefel-basierender Vernetzer kann Schwefel in elementarer löslicher oder unlöslicher Form oder in Form von Schwefelspendern wie beispielsweise Dimorpholyldisulfid (DTDM), 2-Morpholinodithiobenzothiazol (MBSS), Caprolactamdisulfid, Dipentamethylen-thiuramtetrasulfid (DPTT) oder Tetramethylthiuramdisulfid (TMTD) eingesetzt werden.

Vernetzer wie insbesondere Schwefel und Schwefelspender können in Mengen von beispielsweise 0,1 bis 15 phr bevorzugt 0,1 bis 10 phr eingesetzt werden. Grundsätzlich kann die Vernetzung der erfindungsgemäßen Kautschukmischungen mit Schwefel oder Schwefelspendern allein erfolgen, bevorzugt enthalten die erfindungsgemäßen Kautschukmischungen mit Schwefel oder Schwefelspendern als Vernetzer aber mindestens einen Vulkanisationsbeschleuniger, gegebenenfalls in Kombination mit üblichen Aktivatoren. Der Vulkanisationsbeschleuniger wird typischerweise in einer Menge von 0,1 bis 15 phr, bevorzugt 0,1 bis 10 phr eingesetzt. Beispiele für geeignete Vulkanisationsbeschleuniger sind z. B. Mercaptobenzothiazole, Sulfenamide, Guanidine, Thiuramdisulfide, Dithiocarbamate, Thioharnstoffe, Thiocarbonate sowie Dithiophosphate, Zinkdiamindiisocyanat, Hexamethylentetramin, 1,3-Bis(citraconimidomethyl)benzol sowie zyklische Disulfane etc.

Bei der Verwendung peroxidischer Vernetzer kann es vorteilhaft sein, diese zusammen mit weiteren Zusätze zu verwenden, welche die Vernetzungsausbeute erhöhen, wie beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropan-tri(meth)acrylat, Zinkdiacrylat, Zinkdimethacrylat, 1,2-Polybutadien oder N,N'-m-Phenylen-dimaleinimid.

### Reversionsschutzmittel

Die erfindungsgemäßen Kautschukmischungen können eine oder mehrere Reversionsschutzmittel wie beispielsweise 1,6-Bis-(N,N-dibenzyl-thiocarbamoyldithio)hexan (CAS-Nr.: 151900-44-6), 1,3-Bis((3-methyl-2,5-dioxopyrrol-1-yl)methyl)benzol (CAS-Nr.. 119462-56-5) oder Hexamethylen-1,6-bis(thiosulfat), Dinatriumsalz, Dihydrat (CAS-Nr.: 5719-73-3) enthalten. Besonders bevorzugt ist 1,6-Bis-(N,N-dibenzyl-thiocarbamoyl-dithio)hexan zu nennen. Die genannten Reversionsschutzmittel können einzeln oder in beliebiger Mischung eingesetzt werden; vorzugsweise in einer Menge von 0,1 bis 20 phr bezogen auf den Kautschuk.

### Alterungsschutzmittel

Gegen die Einwirkung von Wärme und Sauerstoff kann es vorteilhaft sein, der erfindungsgemäßen Kautschukmischung ein oder mehrere Alterungsschutzmittel zuzusetzen. Geeignet sind z.B. phenolische Alterungsschutzmittel wie alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt werden. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD).

Weitere Alterungsschutzmitteln sind Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden. Die genannten Alterungsschutzmittel werden der erfindungsgemäßen Kautschukmischung typischerweise in Mengen von 0,1 bis 5 phr zugesetzt.

### Antioxidantien

Die Ozonbeständigkeit der erfindungsgemäßen Kautschukmischungen können durch Verwendung dem Fachmann bekannter Antioxidantien wie beispielsweise N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD), Enol Ether oder cyclische Acetale verbessert werden. Die Antioxidantien werden der erfindungsgemäßen Kautschukmischung typischerweise in Mengen von 0,1 bis 5 phr zugesetzt werden.

### Weichmacher

Die erfindungsgemäßen Kautschukmischungen können übliche Weichmacher wie Mineralöl und/oder synthetische Ester wie beispielsweise Phthalsäureester, Adipinsäureester, Phosphorsäurester, Zitronensäureester, Benzoesäureester, Trimilitatsäureester enthalten. Die übliche Einsatzmenge liegt hier bei 0,11 bis 80 phr, bevorzugt 0,2 bis 60 phr, besonders bevorzugt 0,5 bis 45 phr.

Erfindungsgemäß bevorzugte Kautschukmischungen sind frei von Thioethern und Thioestern, gemischten Ether-Thioethern und Ester-Thioethern, wie sie in DE 102010005558 A1 beschrieben werden. Solche als Weichmacher bekannte Verbindungen werden u.a. für die Verbesserung der Kälteflexibilität des Gummis eingesetzt. Der Ausdruck 'frei' bedeutet im Rahmen dieser Erfindung einen Gehalt von kleiner 1 phr, vorzugsweise kleiner 0,1 phr, besonders bevorzugt kleiner 0,01 phr.

### Verarbeitungshilfsmittel

Die erfindungsgemäßen Kautschukmischungen können weiterhin übliche Verarbeitungshilfsmittel enthalten. Solche Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel kann die erfindungsgemäße Kautschukmischung alle für die Verarbeitung von Kunststoffen üblichen Gleitmittel in den für diese Zusätze üblichen Mengen enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise Estern von Ethanol, Fettalkoholen, Glycerin, Ethandiol, Pentaerythrit und langkettigen Carbonsäuren als Säurekomponente.

### Sonstige Additive

Der erfindungsgemäßen Kautschukmischungen können weitere Additive zugesetzt werden wie Flammschutzmittel, UV-Schutzmittel, Klebrigmacher-Harze, Pigmente, Farbstoffe, Haftmittel und Haftvermittler, Treibmittel, Antistatika, Biozide, Mineralöl, Tackifier, Treibmittel, Farbstoffe, Pigmente, Wachse, Harze, Streckmittel, organische Säuren, Vulkanisationsverzögerer, Vulkanisationsaktivatoren, wie Zinkoxid, Stearinsäure, sowie Zinkstearat, Metalloxide, sowie weitere Füllstoffaktivatoren, wie beispielsweise Triethanolamin, Trimethylolpropan, Polyethylenglykol, Hexantriol, aliphatische Trialkoxysilane oder anderen, die in der Gummiindustrie bekannt sind. Die typischen Einsatzmengen betragen ca. 1 bis 50 phr.

### Kunststoffe

Der erfindungsgemäßen Kautschukmischungen können gegebenenfalls auch weitere Kunststoffe enthalten, die beispielsweise als polymere Verarbeitungshilfsmittel oder Schlagzähigkeitsverbesserer wirken. Diese Kunststoffe werden ausgewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen. Zu nennen sind insbesondere Polyacrylate mit gleichen oder verschiedenen Alkoholresten aus der Gruppe der C4- bis C8-Alkohole, besonders des Butanols, Hexanols, Octanols und 2-Ethylhexanols, Polymethylmethacrylat, Methyl-methacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere.

Besonders bevorzugt sind Kautschukmischungen enthaltend mindestens einen Kautschuk aus der Gruppe der zuvor beispielhaft erwähnten Synthesekautschuke und 1 bis 40 phr Verbindung(en) der Formel (I), 0,05 bis 10 phr an mindestens einem Schwefel/ Beschleuniger-System aus der Gruppe Schwefel/Sulfenamid-Systeme und 50 bis 90 phr an hydroxylgruppenhaltigen oxidischen Füllstoff(en) und 0,2 bis 12 phr an mindestens einem Silan aus der Reihe der schwefelhaltigen siliciumorganischen Verbindungen. Ganz besonders bevorzugt sind Kautschukmischungen enthaltend mindestens einen Kautschuk aus der Gruppe der Styrol-Butadien-Kautschuk und Polybutadien und 1 bis 40 phr Verbindung(en) der Formel (I), 0,05 bis 10 phr an mindestens einem Schwefel/Beschleuniger-System aus der Gruppe Schwefel/Sulfenamid-Systeme, 50 bis 100 phr Kieselsäure mit einer spezifischen BET Oberfläche von 5 bis 1000 m²/g und 0,2 bis 12 phr an mindestens einem Verstärkungsadditiv ausgewählt aus der Gruppe enthaltend polyetherfunktionalisiertes Mercaptosilan (z.B. Si 363), Bis(triethoxisilylpropyl)tetrasulfid und Bis(triethoxysilylpropyl)disulfid.

Die erfindungsgemäßen Kautschukmischungen können in für den Fachmann üblicher Weise hergestellt werden, indem man beispielsweise die einzelnen Bestandteile miteinander vermischt, vorzugsweise in einem diskontinuierlichen Mischverfahren (auf Innenmischern und Walzwerken) und typischerweise bei einer Temperatur von 80 bis 150°C.

Dabei können Additive der Formel (I) der Kautschukkomponente entweder einzeln oder als Mischung in beliebigem Mischungsverhältnis und in jeder Mischstufe des Mischverfahrens beigegeben werden.

Die Zugabe des erfindungsgemäß zu verwendenden Additivs der Formel (I) gegebenenfalls zusammen mit weiteren Zusatzstoffen erfolgt bevorzugt im ersten Teil des Mischprozesses bei Massetemperaturen von 100 - 200 °C, kann jedoch auch später bei tieferen Temperaturen (40 - 100°C) z.B. zusammen mit Schwefelvernetzer und/oder Beschleuniger erfolgen.

Dabei werden der Vernetzer und/oder der Vulkanisationsbeschleuniger zweckmäßigerweise nicht in einem Mischschritt mit erhöhten Temperaturen zugesetzt, wie er zur Aktivierung des hydroxylgruppenhaltigen oxidischen Füllstoffs (z.B. Kieselsäure) mittels der schwefelhaltigen siliciumorganischen Verbindungen durchgeführt wird, da dies zu einer vorzeitigen Anvulkanisation der Mischung führen würde. Vernetzer und/oder Vulkanisationsbeschleuniger werden daher bevorzugt nach Zugabe der schwefelhaltigen siliciumorganischen Verbindungen bei Temperaturen von bevorzugt unter 100°C eingearbeitet.

In einer bevorzugten Ausführungsform werden die Verbindungen der Formel (I), insbesondere Triacetin, zur besseren Dosierbarkeit und/oder Dispergierbarkeit auf einen Träger aufgebracht bzw. an diesen adsorbiert eingesetzt (dry liquid). Als Träger können beispielsweise die oben als Füllstoff aufgeführten Materialien verwendet werden, sofern diese nicht mit dem Triacetin reagieren. Besonders bevorzugt werden neutrales, acides oder basisches Silica, Ruß oder Zinkoxid, ganz besonders bevorzugt neutrales oder acides Silica, am meisten bevorzugt neutrales Silica als Träger eingesetzt. Das Verhältnis der Gesamtmenge an flüssigen Verbindungen der Formel (I) zu Trägermaterial (im dry liquid) liegt vorzugsweise im Bereich von 5:1 bis 1:20, besonders bevorzugt im Bereich von 2:1 bis 1:4 und ganz besonders bevorzugt im Bereich von 2:1 bis 1:2.

Die Herstellung der erfindungsgemäßen Kautschukvulkanisate wird beispielhaft beschrieben:

### 1. Mischstufe:

Kautschuk (z.B. Mischung aus SBR und BR) werden in einem Innenmischer vorgelegt und ca. 30 Sekunden gemischt

Gegebenenfalls Zugabe von hydroxylgruppen-haltigem oxidischem Füllstoff und Silan zur Oberflächenmodifizierung (z.B. Zugabe von zwei Drittel Kieselsäure, zwei Drittel Silan, mischen für ca. 60 Sekunden und weitere Zugabe von ein Drittel Kieselsäure, ein Drittel Silan, mischen für ca. 60 Sekunden)

Zugabe des Additivs der Formel (I) und gegebenenfalls Zugabe von Russ, Öl, Alterungsschutzmitteln, Zinkoxid sowie Ozonschutzwachse, mischen für ca. 60 Sekunden.

Dieser Mischungsvorgang kann bei Temperaturen im Bereich von 100 bis 170°C erfolgen, vorzugsweise bei 150°C.

### 2. Mischstufe:

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

Die Verarbeitungstemperaturen liegen hierbei unter 60°C.

### 3. Mischstufe:

In der dritten Mischstufe erfolgt ein Nachzwicken bei 140 bis 170°C, vorzugsweise bei 150°C zum Beispiel in einem Kneter/Innenmischer.

### 4. Mischstufe:

Zugabe von Zusatzstoffen wie zum Beispiel Vulkanisationsbeschleuniger und/oder Schwefel-Vernetzer, vorzugsweise auf einer Walze bei niedrigen Temperaturen (< 80°C).

Geeignete Aggregate für die Mischungsherstellung sind an sich bekannt und schließen beispielsweise Walzen, Innenmischer oder auch Mischextruder ein.

Durch den Einsatz von Verbindungen der Formel (I) als Kautschukadditiv gelingt es, die Verarbeitbarkeit der Kautschukmischung zu verbessern. So wird insbesondere die Anvulkanisationszeit der Kautschukmischung verlängert bei gleichzeitiger Verkürzung der Vulkanisationszeit, ohne dass die Eigenschaften daraus hergestellter Kautschukvulkanisate wie Härte, Bruchdehnung, Zugfestigkeit, Abrieb negativ beeinflusst werden. Insbesondere sind Reifenlaufflächen herstellbar, welche einen Verlustfaktor bei 0°C (Indikator für die Nasshaftung) von vorzugsweise > 0,35 aufweisen. Weiterhin bieten die erfindungsgemäßen Kautschukmischungen den Vorteil, dass sie zumindest teilweise auf Bestandteilen basieren, die durch Verwendung nachwachsender Rohstoffe erhältlich sind.

Ein weiterer Gegenstand der vorliegenden Erfindung ist die Verwendung von Verbindungen der Formel (I), insbesondere von Triacetin, zur Herstellung der erfindungsgemäßen Kautschukmischungen. Bevorzugt können hierfür die auf einen Träger aufgebrachte bzw. adsorbierte Verbindungen der Formel (I) verwendet werden.

Ein weiterer Gegenstand der vorliegenden Erfindung ist ein Verfahren zur Herstellung von Kautschukvulkanisaten, dadurch gekennzeichnet, dass man die erfindungsgemäßen Kautschukmischungen in Gegenwart mindestens eines Vernetzungssystems und/oder Vulkanisationsbeschleunigers bei einer Temperatur von 100°C bis 250°C, bevorzugt 130 bis 180°C ausvulkanisiert. In einer bevorzugten Ausführungsform geschieht die Vulkanisation bei einem Druck von 1 bis 200 bar. Eine Schwefelvernetzung mit den oben genannten Vernetzungssystemen ist für die Vulkanisation bevorzugt.

Die vorliegende Erfindung umfasst auch Kautschukvulkanisate erhältlich durch Vulkanisation der erfindungsgemäßen Kautschukmischungen, sowie Kautschukprodukte enthaltend diese Vulkanisate, insbesondere Reifen, da entsprechende Reifen den Vorteil einer hohen Härte gepaart mit einem guten Rollwiderstand und niedrigem Abrieb aufweisen.

Die Ausrüstung von Fahrzeugen insbesondere Kraftfahrzeugen mit Reifen, welche die erfindungsgemäßen Vulkanisate enthalten, führt zu einem geringeren Energieaufwand beim Betrieb dieser Fahrzeuge, wodurch bei Kraftfahrzeugen mit Verbrennungsmotoren ein geringerer Kraftstoffverbrauch, bei Fahrzeugen mit Elektroantrieb eine größere Reichweite und bei muskelbetriebenen Fahrzeugen eine geringere Anstrengung und/oder eine höhere Geschwindigkeit ermöglicht wird. Daher umfasst die vorliegende Erfindung auch Fahrzeuge enthaltend Kautschukprodukte, welche die erfindungsgemäßen Vulkanisate beinhalten.

Die hergestellten Kautschukvulkanisate eignen sich auch zur Herstellung von technischen Gummiartikeln wie Dämpfungselementen, Walzenbelägen, Belägen von Förderbändern, Riemen, Spinnkopsen, Dichtungen, Golfballkernen, Schuhsohlen, etc.

### Beispiele

Nachfolgend wird die vorliegende Erfindung anhand von Beispielen erläutert ohne diese darauf zu beschränken.

Bestandteile der erfindungsgemäßen Kautschukmischungen:
- 1): Buna® VSL 5025-2 bzw. Buna® VSL 5025-1: ölverstreckter SBR der Lanxess Deutschland GmbH
- 2): Buna® CB 24: BR der Lanxess Deutschland GmbH
- 3): Vulkasil S: Kieselsäure der Lanxess Deutschland GmbH
- 4): Tudalen 1849-1: Mineralöl der Hansen&Rosenthal KG
- 5): Zinkweiss Rotsiegel: Zinkoxid der Firma Grillo Zinkoxid GmbH
- 6): Edenor® C 18 98-100: Stearinsäure der Firma Cognis Deutschland GmbH
- 7): 2,2,4-Trimethyl-1,2-dihydrochinolin, polymerisiert (Vulkanox® HS/LG der Lanxess Deutschland GmbH)
- 8): N-1,3-Dimethylbutyl-N'-phenyl-p-phenylendiamin (Vulkanox® 4020/LG der Lanxess Deutschland GmbH)
- 9): Antilux® 654: Lichtschutzwachs der RheinChemie GmbH
- 10): Bis(triethoxysilylpropyl)polysulfid (Si® 69 der Degussa Hüls AG)
- 11): Corax® N 339: Ruß der Degussa Hüls AG
- 12): Löslicher Schwefel (Mahlschwefel 90/95° Chancel® der Firma Solvay Barium Strontium)
- 13): N-Cyclohexyl-2-benzthiazylsulfenamid (Vulkacit® CZ der Lanxess Deutschland GmbH)
- 14): Diphenylguanidin (Vulkacit® D/C der Lanxess Deutschland GmbH)
- 15): Triacetin (CAS-Nr.: 102-76-1) der Lanxess Deutschland GmbH
- 16): Mischung aus 4 Gewichtsprozent Celluloseacetat (CAS-Nr.: 9004-35-7) der Firma Eastman und 96 Gewichtsprozent Triacetin (CAS-Nr.: 102-76-1) der Lanxess Deutschland GmbH
- 17): Mischung aus 50 Gewichtsprozent Vulkasil N der Lanxess Deutschland GmbH (gefällte Kieselsäure) und 50 Gewichtsprozent Triacetin (CAS-Nr.: 102-76-1) der Lanxess Deuschland GmbH
- 18): Mischung aus 50 Gewichtsprozent Vulkasil A 1 der Lanxess Deutschland GmbH (gefälltes Natrium-Aluminium-Silikat) und 50 Gewichtsprozent Triacetin (CAS-Nr.: 102-76-1) der Lanxess Deuschland GmbH
- 19): Mischung aus 50 Gewichtsprozent Vulkasil S der Lanxess Deutschland GmbH (gefällte Kieselsäure) und 50 Gewichtsprozent Triacetin (CAS-Nr.: 102-76-1) der Lanxess Deuschland GmbH
- 20): VP Si 363 der Evonik (bifunktionelles Organosilan)
- 21): Vulkalink 1871 der Lanxess Deutschland GmbH (2,2'-Tetrathiodibenzoesäure)

### Herstellung der erfindungsgemäßen Kautschukvulkanisate

Aus den in Tabelle 1 aufgeführten Kautschuk-Rezepturen für das Beispiel 1 sowie für das Referenzbeispiel wurden Vulkanisate hergestellt. Dazu wurden jeweils in einem mehrstufigen Mischprozess, wie unten beschrieben, die jeweiligen Bestandteile des Beispiels 1 sowie des Referenzbeispiels gemischt und die Mischungen anschließend bei 170°C ausvulkanisiert.

### 1. Mischstufe:

BUNA® CB 24 und BUNA® VSL 5025-2 wurde in einem Innenmischer vorgelegt und ca. 30 Sekunden gemischt
Zugabe zwei Drittel VULKASIL® S, zwei Drittel SI® 69 und Mischen für ca 60 Sekunden Zugabe ein Drittel VULKASIL® S, ein Drittel SI® 69, sowie TUDALEN 1849-1 und Mischen für ca. 60 Sekunden
Zugabe von CORAX® N 339, EDENOR® C 18 98-100, VULKANOX® 4020/LG, VULKANOX® HS/LG, ZINKWEISS ROTSIEGEL, ANTILUX® 654 sowie Triacetin und ggf. Celluloseacetat und Mischen für ca. 60 Sekunden
Dieser Mischungsvorgang erfolgte bei einer Temperatur von 150°C.

### 2. Mischstufe:

Nach Abschluss der ersten Mischstufe wurde das Mischstück von einem nachgeschalteten Walzwerk aufgenommen und zu einer Platte ausgeformt und für 24 Stunden bei Raumtemperatur gelagert.
Verarbeitungstemperaturen liegen hierbei unter 60°C.

### 3. Mischstufe:

In der dritten Mischstufe erfolgte ein Nachzwicken bei 150°C in einem Kneter.

### 4. Mischstufe:

Zugabe der Zusatzstoffe MAHLSCHWEFEL 90/95 CHANCEL, VULKACIT® CZ/C, VULKACIT® D/C auf einer Walze bei Temperaturen unter 80°C.

Die hergestellten Kautschukmischungen und Vulkanisate wurden den nachfolgend angegebenen technischen Prüfungen unterzogen. Die ermittelten Werte sind ebenfalls Tabelle 1 zu entnehmen.

### Prüfungen der Kautschukmischungen und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird.

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten der in Tabelle 1 genannten Kautschukmischungen werden mittels Scherscheibenviskosimeter nach Mooney gemäß ASTM D 1646 gemessen.

Des Weiteren wird mit der gleichen Prüfung das "Scorch"-Verhalten der Mischungen gemessen. Die Temperatur beträgt 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmung der Härte (Shore A):

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zugversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 1 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan delta indirekt über das Verhältnis zwischen Verlustmodul G" und Speichermodul G' bestimmt.

**Tabelle 1**

| **Bestandteil** | **Einheit** | **Referenzbeispiel 1** | **Beispiel 1** |
|---|---|---|---|
| BUNA CB 24 | phr | 30 | 30 |
| BUNA VSL 5025-2 | phr | 96 | 96 |
| CORAX N 339 | phr | 6,4 | 6,4 |
| VULKASIL S | phr | 80 | 80 |
| EDENOR C 18 98-100 | phr | 1 | 1 |
| VULKANOX 4020/LG | phr | 1 | 1 |
| VULKANOX HS/LG | phr | 1 | 1 |
| ZINKWEISS ROTSIEGEL | phr | 2,5 | 2,5 |
| ANTILUX 654 | phr | 1,5 | 1,5 |
| SI 69 | phr | 6,4 | 6,4 |
| TUDALEN 1849-TE | phr | 8 | 8 |
| VULKACIT D/C | phr | 2 | 2 |
| VULKACIT CZ/C | phr | 1,5 | 1,5 |
| MAHLSCHWEFEL 90/95 CHANCEL | phr | 1,5 | 1,5 |
| Triacetin | phr | | 8 |
| | | | |
| Mooney Viskosität (ML1+4) | [ME] | 94 | 71 |
| Anvulkanisationszeit (t5) | sec | 602 | 1141 |
| Ausvulkanisationszeit (t95) | s | 1494 | 1369 |
| Bruchdehnung | % | 387 | 406 |
| Shore A Härte | Shore A | 65 | 66 |
| Zugfestigkeit | MPa | 22 | 20 |
| Naßhaftung [tan δ (0°C)] | - | 0,430 | 0,417 |

**Tabelle 1a**

| **Bestandteil** | **Einheit** | **Referenzbeispiel 1** | **Beispiel 1a** |
|---|---|---|---|
| BUNA CB 24 | phr | 30 | 30 |
| BUNA VSL 5025-2 | phr | 96 | 96 |
| CORAX N 339 | phr | 6,4 | 6,4 |
| VULKASIL S | phr | 80 | 80 |
| EDENOR C 18 98-100 | phr | 1 | 1 |
| VULKANOX 4020/LG | phr | 1 | 1 |
| VULKANOX HS/LG | phr | 1 | 1 |
| ZINKWEISS ROTSIEGEL | phr | 2,5 | 2,5 |
| ANTILUX 654 | phr | 1,5 | 1,5 |
| SI 69 | phr | 6,4 | 6,4 |
| TUDALEN 1849-TE | phr | 8 | 8 |
| VULKACIT D/C | phr | 2 | 2 |
| VULKACIT CZ/C | phr | 1,5 | 1,5 |
| MAHLSCHWEFEL 90/95 CHANCEL | phr | 1,5 | 1,5 |
| 1:1 - Mischung aus Triacetin : Vulkasil N | phr | | 16 |
| | | | |
| Mooney Viskosität (ML1+4) | [ME] | 94 | 70 |
| Anvulkanisationszeit (t5) | sec | 602 | 1537 |
| Ausvulkanisationszeit (t95) | s | 1494 | 1220 |
| Bruchdehnung | % | 387 | 357 |
| Shore A Härte | Shore A | 65 | 68 |
| Zugfestigkeit | MPa | 22 | 17 |
| Naßhaftung [tan δ (0°C)] | - | 0,430 | 0,343 |

**Tabelle 1b**

| **Bestandteil** | **Einheit** | **Referenzbeispiel 1** | **Beispiel 1b** |
|---|---|---|---|
| BUNA CB 24 | phr | 30 | 30 |
| BUNA VSL 5025-2 | phr | 96 | 96 |
| CORAX N 339 | phr | 6,4 | 6,4 |
| VULKASIL S | phr | 80 | 80 |
| EDENOR C 18 98-100 | phr | 1 | 1 |
| VULKANOX 4020/LG | phr | 1 | 1 |
| VULKANOX HS/LG | phr | 1 | 1 |
| ZINKWEISS ROTSIEGEL | phr | 2,5 | 2,5 |
| ANTILUX 654 | phr | 1,5 | 1,5 |
| SI 69 | phr | 6,4 | 6,4 |
| TUDALEN 1849-TE | phr | 8 | 8 |
| VULKACIT D/C | phr | 2 | 2 |
| VULKACIT CZ/C | phr | 1,5 | 1,5 |
| MAHLSCHWEFEL 90/95 CHANCEL | phr | 1,5 | 1,5 |
| 1:1 - Mischung aus Triacetin : Vulkasil A 1 | phr | | 16 |
| | | | |
| Mooney Viskosität (ML1+4) | [ME] | 94 | 65 |
| Anvulkanisationszeit (t5) | sec | 602 | 1393 |
| Ausvulkanisationszeit (t95) | s | 1494 | 1177 |
| Bruchdehnung | % | 387 | 382 |
| Shore A Härte | Shore A | 65 | 66 |
| Zugfestigkeit | MPa | 22 | 18 |
| Naßhaftung [tan δ (0°C)] | - | 0,430 | 0,417 |

**Tabelle 1c**

| **Bestandteil** | **Einheit** | **Referenzbeispiel 1** | **Beispiel 1c** |
|---|---|---|---|
| BUNA CB 24 | phr | 30 | 30 |
| BUNA VSL 5025-2 | phr | 96 | 96 |
| CORAX N 339 | phr | 6,4 | 6,4 |
| VULKASIL S | phr | 80 | 80 |
| EDENOR C 18 98-100 | phr | 1 | 1 |
| VULKANOX 4020/LG | phr | 1 | 1 |
| VULKANOX HS/LG | phr | 1 | 1 |
| ZINKWEISS ROTSIEGEL | phr | 2,5 | 2,5 |
| ANTILUX 654 | phr | 1,5 | 1,5 |
| SI 69 | phr | 6,4 | 6,4 |
| TUDALEN 1849-TE | phr | 8 | 8 |
| VULKACIT D/C | phr | 2 | 2 |
| VULKACIT CZ/C | phr | 1,5 | 1,5 |
| MAHLSCHWEFEL 90/95 CHANCEL | phr | 1,5 | 1,5 |
| 1:1 - Mischung aus Triacetin : Vulkasil S (1:1) | phr | | 16 |
| | | | |
| Mooney Viskosität (ML1+4) | [ME] | 94 | 72 |
| Anvulkanisationszeit (t5) | sec | 602 | 1557 |
| Ausvulkanisationszeit (t95) | s | 1494 | 1319 |
| Bruchdehnung | % | 387 | 361 |
| Shore A Härte | Shore A | 65 | 70 |
| Zugfestigkeit | MPa | 22 | 16 |
| Naßhaftung [tan δ (0°C)] | - | 0,430 | 0,343 |

**Tabelle 1d**

| **Bestandteil** | **Einheit** | **Beispiel 1d** | **Beispiel 1e** |
|---|---|---|---|
| BUNA CB 24 | phr | 30 | 30 |
| BUNA VSL 5025-2 | phr | 96 | 96 |
| CORAX N 339 | phr | 6,4 | 6,4 |
| VULKASIL S | phr | 72 | 72 |
| EDENOR C 18 98-100 | phr | 1 | 1 |
| VULKANOX 4020/LG | phr | 1 | 1 |
| VULKANOX HS/LG | phr | 1 | 1 |
| ZINKWEISS ROTSIEGEL | phr | 2,5 | 2,5 |
| ANTILUX 654 | phr | 1,5 | 1,5 |
| SI 69 | phr | 6,4 | - |
| SI 363 | phr | - | 9,6 |
| TUDALEN 1849-TE | phr | 8 | 8 |
| VULKACIT D/C | phr | 2 | 2 |
| VULKACIT CZ/C | phr | 1,5 | 1,5 |
| MAHLSCHWEFEL 90/95 CHANCEL | phr | 1,5 | 1,5 |
| 1:1 - Mischung aus Triacetin : Vulkasil N | phr | 16 | 16 |
| Vulkalink 1871 | phr | 1 | - |

Es wurde gefunden, dass Additive der Formel (I) zu Kautschukmischungen mit deutlich reduzierter Kautschukviskosität (Mooney Viskosität) und zu Vulkanisaten mit deutlich längerer Anvulkanisationszeit und gleichzeitig kürzerer Ausvulkanisationszeit führen. Die Härte-Werte sind zudem sehr gut.

In einer weiteren Versuchsreihe unter Verwendung von BUNA VSL 5025-1 anstelle von BUNA VSL 5025-2 (geringerer Ölgehalt) wurde die Anwendung von Celluloseacetat als 4%-ige Lösung in Triacetin untersucht. Die Ergebnisse sind in Tabelle 2 dargestellt:

**Tabelle 2**

| **Bestandteil** | **Einheit** | **Referenzbeispiel 2** | **Beispiel 2** | **Beispiel 3** |
|---|---|---|---|---|
| BUNA CB 24 | phr | 30 | 30 | 30 |
| BUNA VSL 5025-1 | phr | 96 | 96 | 96 |
| CORAX N 339 | phr | 6,4 | 6,4 | 6,4 |
| VULKASIL S | phr | 80 | 80 | 80 |
| TUDALEN 1849-1 | phr | 8 | 8 | 0 |
| EDENOR C 18 98-100 | phr | 1 | 1 | 1 |
| VULKANOX 4020/LG | phr | 1 | 1 | 1 |
| VULKANOX HS/LG | phr | 1 | 1 | 1 |
| ZINKWEISS ROTSIEGEL | phr | 2,5 | 2,5 | 2,5 |
| ANTILUX 654 | phr | 1,5 | 1,5 | 1,5 |
| SI 69 | phr | 6,4 | 6,4 | 6,4 |
| MAHLSCHWEFEL 90/95 CHANCEL | phr | 1,5 | 1,5 | 1,5 |
| VULKACIT CZ/C | phr | 1,5 | 1,5 | 1,5 |
| VULKACIT D/C | phr | 2 | 2 | 2 |
| Celluloseacetat/Triacetin 4:96 | phr | | 10 | 20 |
| | | | | |
| Mooney Viskosität (ML 1+4) | [ME] | 91 | 66 | 66 |
| Anvulkanisationszeit (t5) | sec | 1085 | 1582 | 1468 |
| Ausvulkanisationszeit (t95) | sec | 1213 | 1091 | 940 |
| Härte | [Shore A] | 70 | 70 | 69 |
| Bruchdehnung | % | 338 | 377 | 388 |
| Zugfestigkeit | MPa | 18 | 19 | 16 |
| tan δ (0°C) | | 0,458 | 0,416 | 0,399 |
| tan δ (60°C) | | 0,147 | 0,142 | 0,123 |

Auch bei der Verwendung von 4% Celluloseacetat in Triacetin zeigt sich eine bedeutende Verbesserung der Fließfähigkeit (Abnahme der Mooney Viskosität). Zudem wird bereits bei Zugabe von 10 phr dieser Additivmischung die Anvulkanisationszeit sowie die Bruchdehnung erhöht und die Ausvulkanisationszeit erniedrigt. Wird, wie in Beispiel 3 gezeigt, auf das Weichmacheröl (TUDALEN 1849-1) verzichtet und dafür die eingesetzte Menge Celluloseacetat/Triacetin auf 20 phr erhöht, so werden unter Beibehaltung der guten Fließfähigkeit, Anvulkanisationszeit, Bruchdehnung und Ausvulkanisationszeit der tan δ -Wert bei 60°C (Indiz für den Rollwiderstand) überraschend stark vermindert, was als ein Indiz für einen signifikant verringerten Rollwiderstand darstellt. Gleichzeitig bleiben die Härte und Naßrutschfestigkeit auf einem anwendungstechnisch guten Niveau.

## Patentansprüche

1. Kautschukmischung enthaltend mindestens je einen unpolaren Kautschuk ausgewählt aus der Gruppe bestehend aus NR, SBR, BR, IR, SIBR, IIR, ENR und EPDM, bevorzugt NR, SBR, BR, IIR und EPDM, besonders bevorzugt NR, BR und SBR, Ruß und kurzkettigen Alkylester des Glyzerins gemäß Formel (I): 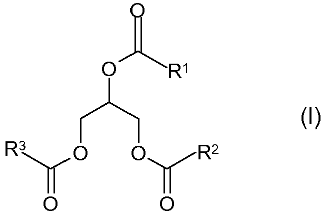 worin
R1, R2, R3 unabhängig voneinander Wasserstoff oder ein geradkettiger oder verzweigter C1-C4 -Alkylrest bedeuten.

2. Kautschukmischung gemäß Anspruch 1, **dadurch gekennzeichnet, dass** sie mindestens einen Vernetzer, vorzugsweise mindestens einen peroxidischen oder Schwefel-basierenden Vernetzer, besonders bevorzugt mindestens einen Vernetzer aus der Gruppe enthaltend Schwefel, Dimorpholyldisulfid (DTDM), 2-Morpholinodithiobenzothiazol (MBSS), Caprolactamdisulfid, Dipentamethylen-thiuramtetrasulfid (DPTT) und Tetramethylthiuramdisulfid (TMTD), enthält.

3. Kautschukmischung nach Anspruch 1 oder 2, **dadurch gekennzeichnet, dass** R1, R2 und R3 für Methyl stehen.

4. Kautschukmischung nach einem der Ansprüche 1 bis 3, **dadurch gekennzeichnet, dass** der Gehalt an Verbindungen der Formel (I) 1 bis 40 phr, vorzugsweise 2 bis 20 phr, besonders bevorzugt 4 bis 15 phr, ganz besonders bevorzugt 6 bis 10 phr beträgt.

5. Kautschukmischung nach einem der Ansprüche 1 bis 4, **dadurch gekennzeichnet, dass** der Gehalt an NBR, HNBR, SNBR, HXNBR und XNBR jeweils kleiner 10 phr, bevorzugt kleiner 1 phr, besonders bevorzugt kleiner 0,1 phr und ganz besonders bevorzugt kleiner 0,01 phr beträgt.

6. Kautschukmischung nach einem der Ansprüche 1 bis 5, **dadurch gekennzeichnet, dass** sie zusätzlich mindestens einen hydroxylgruppen-haltigen oxidischen Füllstoff, vorzugsweise Kieselsäure mit einer spezifischen BET Oberfläche von 5 bis 1000 m²/g enthält.

7. Kautschukmischung nach einem der Ansprüche 1 bis 6, **dadurch gekennzeichnet, dass** sie 50 bis 100 phr hydroxylgruppenhaltigen oxidischen Füllstoff und 0,2 bis 12 phr an organischen Silanen, vorzugsweise schwefelhaltigen organischen Silanen, besonders bevorzugt Alkoxysilyl- und ganz besonders bevorzugt Trialkoxysilylgruppen enthaltenden schwefelhaltigen organischen Silanen enthält.

8. Kautschukmischung nach einem der Ansprüche 1 bis 7, **dadurch gekennzeichnet, dass** sie Cellulose und/oder Cellulosederivate, vorzugsweise Cellulosederivate, die durch Veresterung von Cellulose mit Carbonsäuren erhältlich sind, besonders bevorzugt Celluloseacetat enthält.

9. Kautschukmischung nach einem der Ansprüche 1 bis 8, **dadurch gekennzeichnet, dass** eine Verbindung der Formel (I) eingesetzt wird, welche auf einen Träger aufgebracht bzw. an diesen adsorbiert ist, wobei als Träger vorzugsweise mindestens eine Substanz ausgewählt aus der Gruppe enthaltend neutrales, acides oder basisches Silica, Ruß oder Zinkoxid, dient.

10. Verfahren zur Herstellung einer Kautschukmischung nach einem der Ansprüche 1 bis 9, **dadurch gekennzeichnet, dass** mindestens je ein unpolarer Kautschuk, Ruß und kurzkettiger Alkylester des Glyzerins gemäß Formel (I) in Anspruch 1, vorzugsweise bei einer Temperatur von 80 bis 150°C miteinander vermischt werden.

11. Verfahren zur Herstellung von Kautschukvulkanisaten **dadurch gekennzeichnet, dass** man die Kautschukmischung gemäß einem der Ansprüche 1 bis 9 vulkanisiert, bevorzugt bei einer Temperatur von 100 bis 250 °C, besonders bevorzugt von 130 bis 180 °C.

12. Verwendung von Kautschukmischungen gemäß einem der Ansprüche 1 bis 9 zur Herstellung von Vulkanisaten.

13. Vulkanisate, erhältlich durch Vulkanisation von Kautschukmischungen gemäß einem der Ansprüche 1 bis 9.

14. Kautschukprodukte, insbesondere Reifen enthaltend ein oder mehrere Kautschukvulkanisate gemäß Anspruch 13.

15. Fahrzeug enthaltend Kautschukprodukt gemäß Anspruch 14.

16. Verwendung von Verbindungen der Formel (I) gemäß Anspruch 1 zur Herstellung von Kautschukmischungen gemäß einem der Ansprüche 1 bis 9, Vulkanisaten gemäß Anspruch 13 oder Kautschukprodukten gemäß Anspruch 14.

## Claims

1. Rubber mixture comprising at least one nonpolar rubber selected from the group consisting of NR, SBR, BR, IR, SIBR, IIR, ENR, and EPDM, preferably NR, SBR, BR, IIR, and EPDM, particularly preferably NR, BR and SBR, at least one carbon black and at least one short-chain alkyl ester of glycerol according to formula (I): in which 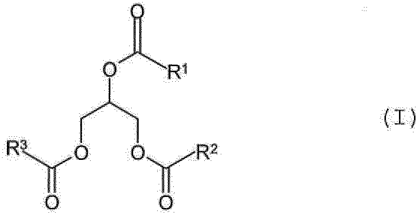 R1, R2, and R3 are mutually independently hydrogen or a straight-chain or branched C1-C4-alkyl moiety.

2. Rubber mixture according to Claim 1, **characterized in that** it comprises at least one crosslinking agent, preferably at least one peroxidic or sulfur-based crosslinking agent, particularly preferably at least one crosslinking agent from the group comprising sulfur, dimorpholyl disulfide (DTDM), 2-morpholinodithiobenzothiazole (MBSS), caprolactam disulfide, dipentamethylenethiuram tetrasulfide (DPTT), and tetramethylthiuram disulfide (TMTD).

3. Rubber mixture according to Claim 1 or 2, **characterized in that** R1, R2, and R3 are methyl.

4. Rubber mixture according to any of Claims 1 to 3, **characterized in that** the content of compounds of the formula (I) is from 1 to 40 phr, preferably from 2 to 20 phr, particularly preferably from 4 to 15 phr, very particularly preferably from 6 to 10 phr.

5. Rubber mixture according to any of Claims 1 to 4, **characterized in that** the content of NBR, HNBR, SNBR, HXNBR, and XNBR is in each case less than 10 phr, preferably less than 1 phr, particularly preferably less than 0.1 phr, and very particularly preferably less than 0.01 phr.

6. Rubber mixture according to any of Claims 1 to 5, **characterized in that** it also comprises at least one oxidic filler containing hydroxy groups, preferably silica with BET specific surface area from 5 to 1000 m²/g.

7. Rubber mixture according to any of Claims 1 to 6, **characterized in that** it comprises from 50 to 100 phr of oxidic filler containing hydroxy groups and from 0.2 to 12 phr of organic silanes, preferably sulfur-containing organic silanes, particularly preferably sulfur-containing organic silanes comprising alkoxysilyl groups, and very particularly preferably sulfur-containing organic silanes comprising trialkoxysilyl groups.

8. Rubber mixture according to any of Claims 1 to 7, **characterized in that** it comprises cellulose and/or cellulose derivates, preferably cellulose derivates obtainable by using carboxylic acids to esterify cellulose, particularly preferably cellulose acetate.

9. Rubber mixture according to any of Claims 1 to 8, **characterized in that** a compound of the formula (I) is used which has been applied to a carrier or adsorbed onto same, where at least one substance selected from the group comprising neutral, acidic or basic silica, carbon black, or zinc oxide preferably serves as carrier.

10. Process for the production of a rubber mixture according to any of Claims 1 to 9, **characterized in that** at least one nonpolar rubber, at least one carbon black, and at least one short-chain alkyl ester of glycerol according to formula (I) in claim 1 are mixed with one another, preferably at a temperature of from 80 to 150°C.

11. Process for the production of rubber vulcanizates, **characterized in that** the rubber mixture according to any of Claims 1 to 9 is vulcanized, preferably at a temperature of from 100 to 250°C, particularly preferably from 130 to 180°C.

12. Use of rubber mixtures according to any of Claims 1 to 9 for the production of vulcanizates.

13. Vulcanizates obtainable via vulcanization of rubber mixtures according to any of Claims 1 to 9.

14. Rubber products, in particular tires comprising one or more rubber vulcanizates according to Claim 13.

15. Vehicle comprising the rubber product according to Claim 14.

16. Use of compounds of the formula (I) according to Claim 1 for the production of rubber mixtures according to any of Claims 1 to 9, of vulcanizates according to Claim 13, or of rubber products according to Claim 14.

## Revendications

1. Mélange de caoutchouc contenant au moins un caoutchouc apolaire choisi dans le groupe constitué par NR, SBR, BR, IR, SIBR, IIR, ENR et EPDM, de préférence NR, SBR, BR, IIR et EPDM, de manière particulièrement préférée NR, BR et SBR, un noir de carbone et un ester alkylique de glycérine à chaîne courte selon la formule (I) : 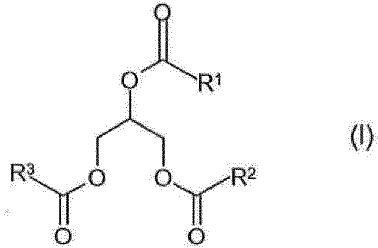 dans laquelle
R1, R2, R3 signifient indépendamment les uns des autres l'hydrogène ou un radical alkyle en C1-C4 linéaire ou ramifié.

2. Mélange de caoutchouc selon la revendication 1, **caractérisé en ce qu'**il contient au moins un agent de réticulation, de préférence au moins un agent de réticulation peroxydique ou à base de soufre, de manière particulièrement préférée au moins un agent de réticulation du groupe contenant le soufre, le disulfure de dimorpholyle (DTDM), le 2-morpholinodithiobenzothiazole (MBSS), le disulfure de caprolactame, le tétrasulfure de dipentaméthylène-thiuram (DPTT) et le disulfure de tétraméthylthiuram (TMTD).

3. Mélange de caoutchouc selon la revendication 1 ou 2, **caractérisé en ce que** R1, R2 et R3 représentent méthyle.

4. Mélange de caoutchouc selon l'une quelconque des revendications 1 à 3, **caractérisé en ce que** la teneur en composés de formule (I) est de 1 à 40 pce, de préférence de 2 à 20 pce, de manière particulièrement préférée de 4 à 15 pce, de manière tout particulièrement préférée de 6 à 10 pce.

5. Mélange de caoutchouc selon l'une quelconque des revendications 1 à 4, **caractérisé en ce que** la teneur en NBR, HNBR, SNBR, HXNBR et XNBR est à chaque fois inférieure à 10 pc, de préférence inférieure à 1 pce, de manière particulièrement préférée inférieure à 0,1 pce, et de manière tout particulièrement préférée inférieure à 0,01 pce.

6. Mélange de caoutchouc selon l'une quelconque des revendications 1 à 5, **caractérisé en ce qu'**il contient en outre au moins une charge oxydique contenant des groupes hydroxyle, de préférence de la silice ayant une surface BET spécifique de 5 à 1 000 m²/g.

7. Mélange de caoutchouc selon l'une quelconque des revendications 1 à 6, **caractérise en ce qu'**il contient 50 à 100 pce d'une charge oxydique contenant des groupes hydroxyle, et 0,2 à 12 pce de silanes organiques, de préférence de silanes organiques contenant du soufre, de manière particulièrement préférée de silanes organiques contenant du soufre contenant des groupes alcoxysilyle et de manière tout particulièrement préférée des groupes trialcoxysilyle.

8. Mélange de caoutchouc selon l'une quelconque des revendications 1 à 7, **caractérisé en ce qu'**il contient de la cellulose et/ou des dérivés de cellulose, de préférence des dérivés de cellulose, qui peuvent être obtenus par estérification de cellulose avec des acides carboxyliques, de manière particulièrement préférée de l'acétate de cellulose.

9. Mélange de caoutchouc selon l'une quelconque des revendications 1 à 8, **caractérisé en ce qu'**un composé de formule (I) est utilisé, qui est appliqué sur un support ou adsorbé sur celui-ci, au moins une substance choisie dans le groupe contenant la silice neutre, acide ou basique, le noir de carbone ou l'oxyde de zinc servant de préférence de support.

10. Procédé de fabrication d'un mélange de caoutchouc selon l'une quelconque des revendications 1 à 9, **caractérisé en ce qu'**au moins un caoutchouc apolaire, un noir de carbone et un ester alkylique de glycérine à chaîne courte selon la formule (I) dans la revendication 1 sont mélangés les uns avec les autres, de préférence à une température de 80 à 150 °C.

11. Procédé de fabrication de vulcanisats de caoutchouc, **caractérisé en ce que** le mélange de caoutchouc selon l'une quelconque des revendications 1 à 9 est vulcanisé, de préférence à une température de 100 à 250 °C, de manière particulièrement préférée de 130 à 180 °C.

12. Utilisation de mélanges de caoutchouc selon l'une quelconque des revendications 1 à 9 pour la fabrication de vulcanisats.

13. Vulcanisats, pouvant être obtenus par vulcanisation de mélanges de caoutchouc selon l'une quelconque des revendications 1 à 9.

14. Produits de caoutchouc, notamment pneus contenant un ou plusieurs vulcanisats de caoutchouc selon la revendication 13.

15. Automobile contenant un produit de caoutchouc selon la revendication 14.

16. Utilisation de composés de formule (I) selon la revendication 1 pour la fabrication de mélanges de caoutchouc selon l'une quelconque des revendications 1 à 9, de vulcanisats selon la revendication 13 ou de produits de caoutchouc selon la revendication 14.
